# EUROPEAN PATENT APPLICATION

(11) **EP 4 387 115 A1**
(43) Date of publication of application: **19.06.2024**
(21) Application number: 23215613.3
(22) Date of filing: 11.12.2023
(51) Int. Cl.: H04B 5/26, H04B 5/43

(54) **NEAR FIELD COMMUNICATION ANTENNA**

(30) Priority: 13.12.2022 US 202218079932
(71) Applicant: Tyco Electronics Holdings (Bermuda) No. 7 Limited, Hamilton HM11 (BM); TE Connectivity Solutions GmbH, 8200 Schaffhausen (CH); Tyco Electronics AMP Korea Co., Ltd., Gyeongsan 712837 (KR)
(72) Inventor: KIM, Jung-Hoon, Suwon 443-380 (KR); VANJANI, Kiran, Fremont, 94555-3641 (US); HSIANG, Kuei Hsu, Taipei 11070 (TW); LEE, Chang Hyun, Suwon 443-380 (KR); SHIN, Hoo, Suwon 443-380 (KR)
(74) Representative: Ashton, Gareth Mark

(57) **Abstract**

A near field communication (NFC) antenna (110) includes a carrier (130) having a base (134) and a support ring (136) extending from the base. The support ring surrounds a central bore (132). The central bore is open through the carrier between a top (135) of the carrier and a bottom (133) of the carrier. The NFC Antenna includes an antenna element (160) coupled to the carrier. The antenna element includes a conductor (162) arranged as a cylindrical coil (164). The cylindrical coil extends along the support ring and surrounds the central bore.

## Description

### BACKGROUND OF THE INVENTION

The subject matter herein relates generally to near field communication (NFC) antennas.

NFC technology is a short-range wireless communication technology. As NFC technology has been developed, NFC devices have been more commonly employed in mobile devices. NFC technology allows contactless data exchange between electronic devices. Systems using NFC technology may include an NFC tag on one device and an NFC reader on another device. NFC tags may have size and shape constraints. There is a desire to reduce the size of NFC antennas to fit within small form factor NFC tags.

### BRIEF DESCRIPTION OF THE INVENTION

In one embodiment, a near field communication (NFC) antenna is provided and includes a carrier having a base and a support ring extending from the base. The support ring surrounds a central bore. The central bore is open through the carrier between a top of the carrier and a bottom of the carrier. The NFC Antenna includes an antenna element coupled to the carrier. The antenna element includes a conductor arranged as a cylindrical coil. The cylindrical coil extends along the support ring and surrounds the central bore.

In another embodiment, a near field communication (NFC) antenna is provided and includes a carrier having a base and a support ring extending from the base. The support ring surrounds a central bore. The central bore is open through the carrier between a top of the carrier and a bottom of the carrier. The NFC antenna includes an antenna element coupled to the carrier. The antenna element includes a wire defining a conductor. The wire is wound into a cylindrical coil having multiple layers vertically stacked above the base. The cylindrical coil extends along the support ring and surrounds the central bore.

In a further embodiment, a near field communication (NFC) antenna is provided and includes a carrier having a base and a support ring extending from the base to an upper edge. The support ring surrounds a central bore. The central bore is open through the carrier between a top of the carrier and a bottom of the carrier. The NFC antenna includes an antenna element coupled to the carrier. The antenna element includes a conductor arranged as a cylindrical coil. The cylindrical coil extends along the support ring and surrounds the central bore. The NFC antenna includes a cover coupled to the upper edge of the support ring. The cover covers the central bore. The cover is removable from the carrier.

### BRIEF DESCRIPTION OF THE DRAWINGS

Figure 1 is a schematic illustration of a communication system in accordance with an exemplary embodiment.
Figure 2 is a perspective view of the NFC antenna of the first electrical device (shown in Figure 1) in accordance with an exemplary embodiment.
Figure 3 is an exploded view of the NFC antenna in accordance with an exemplary embodiment.
Figure 4 is a bottom view of the NFC antenna in accordance with an exemplary embodiment.
Figure 5 is a rear view of the NFC antenna in accordance with an exemplary embodiment.
Figure 6 is a side view of the NFC antenna in accordance with an exemplary embodiment.
Figure 7 is a cross sectional view of the NFC antenna in accordance with an exemplary embodiment.
Figure 8 is a cross sectional view of the NFC antenna in accordance with an exemplary embodiment.
Figure 9 is a cross sectional view of the NFC antenna in accordance with an exemplary embodiment.
Figure 10 is a perspective view of the NFC antenna of the first electrical device (shown in Figure 1) in accordance with an exemplary embodiment.
Figure 11 is a perspective view of the NFC antenna of the first electrical device (shown in Figure 1) in accordance with an exemplary embodiment.

### DETAILED DESCRIPTION OF THE INVENTION

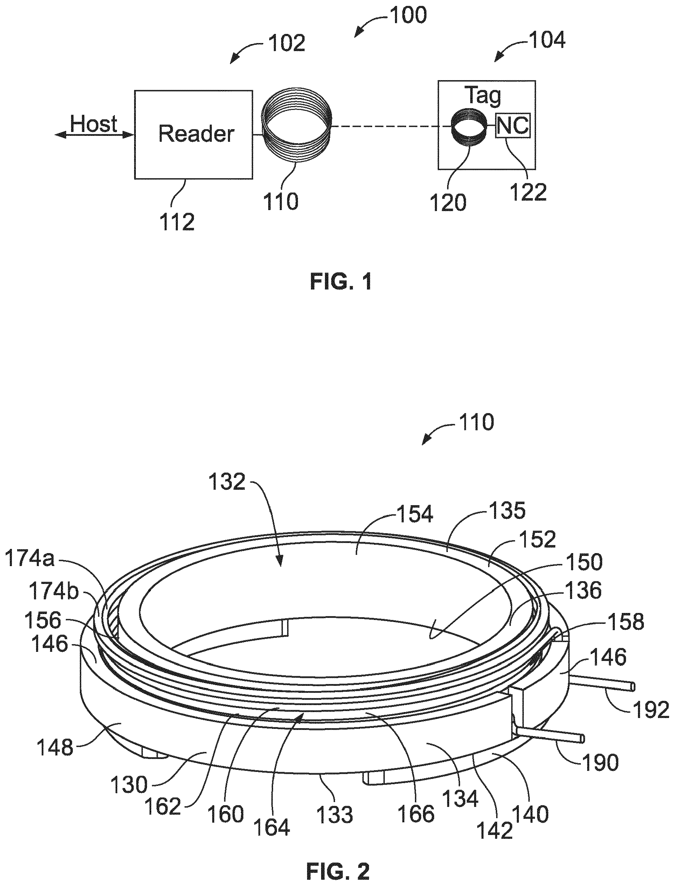

Figure 1 is a schematic illustration of a communication system 100 in accordance with an exemplary embodiment. The communication system 100 provides wireless communication between a first electrical device 102 and a second electrical device 104. In an exemplary embodiment, the communication system 100 is a near field communication (NFC) system.

In various embodiments, the communication system 100 uses short-range wireless technologies to allow communication at a separation distance of approximately 20 cm or less, such as at approximately 10 cm or less. In an exemplary embodiment, the communication system operates at 13.56 MHz on ISO/IEC 18000-3 air interface and at rates ranging from 106 kbit/s to 424 kbit/s.

In an exemplary embodiment, the first electrical device 102 is an initiator or reader and the second electrical device 104 is a target. The first electrical device 102 includes an NFC antenna 110 that generates an RF field, which can power the second electrical device 104. The NFC antenna 110 is connected to a host circuit board 112. The first electrical device 102 (for example, reader or initiator) may provide a carrier field and the second electrical device 104 (for example, target) includes an NFC antenna 120 that communicates with the NFC antenna 110. For example, the second electrical device 104 may act as a transponder and communicate by modulating the incident field. The second electrical device 104 may draw its operating power from the magnetic field provided by the first electrical device 102. The second electrical device 104 may include a microcontroller 122. In other various embodiments, the second electrical device 104 may be a powered device to allow peer-to-peer communication. For example, both the first and second electrical devices 102, 104 communicate by alternately generating their own magnetic fields and are configured to receive data from each other.

The second electrical device 104 may be in a simple form, such as unpowered tags, stickers, key fobs, or cards. Other types of electrical devices may be used in alternative embodiments, such as a smartphone, a tablet, a computer, and the like. The second electrical device 104 may contain data and may be readonly, but may be writable. The second electrical device 104 may be custom-encoded and may include unique data, such as a unique identification. The second electrical device 104 can securely store personal data, such as debit and credit card information, loyalty program data, PINs and networking contacts, among other information.

The communication system 100 may use inductive coupling between antennas of the first and second electrical devices 102, 104 (for example, effectively forming an air-core transformer). The distance separating the first and second electrical devices 102, 104 may be relatively small compared to the wavelength of electromagnetic radiation (radio waves) of the operating frequency (for example, about 22 meters), thus defining near field communication. The first electrical device 102 may use an alternating magnetic field as the main coupling factor and almost no power is radiated in the form of radio waves (which are electromagnetic waves, also involving an oscillating electric field). As such, interference between the first and second electrical devices and any radio communications at the same frequency or with other devices much beyond the intended range may be minimized.

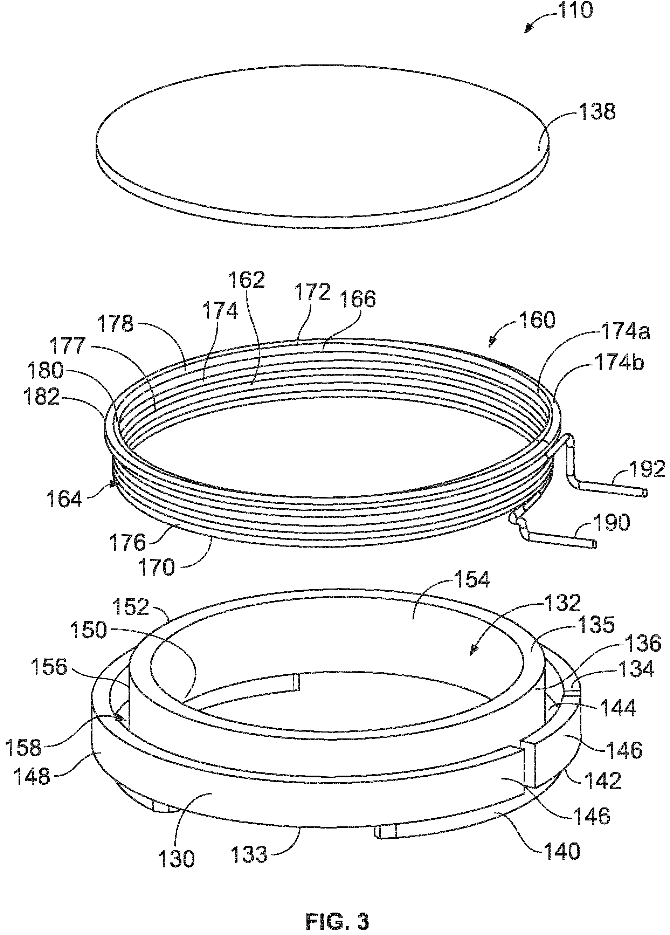

Figure 2 is a perspective view of the NFC antenna 110 of the first electrical device 102 (shown in Figure 1) in accordance with an exemplary embodiment. Figure 3 is an exploded view of the NFC antenna 110 in accordance with an exemplary embodiment.

The NFC antenna 110 includes a carrier 130 and an antenna element 160 coupled to the carrier 130. In an exemplary embodiment, the carrier 130 is cylindrical having a central bore 132 through the center of the carrier 130. The carrier 130 may be manufactured from a plastic material, such as being a molded part. The carrier 130 includes a base 134 and a support ring 136 extending from the base 134. The base 134 and the support ring 136 surround the central bore 132. In an exemplary embodiment, the central bore 132 is open through the carrier 130 between a bottom 133 of the carrier 130 and a top 135 of the carrier 130.

Optionally, a cover 138 may be coupled to the top 135 and/or the bottom 133 to close the central bore 132. The cover 138 may be removable, such as after assembly. For example, the cover 138 may be used for shipping and handling during assembly. For example, the cover 138 may be used during a pick-and-place assembly process for assembling the NFC antenna 110 to a circuit board or other substrate of the first electrical device 102. The cover 138 may be removed after assembly.

In an exemplary embodiment, the base 134 is ring shaped. The base 134 may be circular. The central bore 132 passes through the base 134. The base 134 is provided at or near the bottom 133. The base 134 is configured to be coupled to the circuit board or other substrate of the first electrical device 102. The base 134 extends between a lower surface 142 and an upper surface 144. The support ring 136 extends upward from the upper surface 144. In an exemplary embodiment, the base 134 includes one or more mounting tabs 140 at the bottom 133. The mounting tabs 140 extend from the lower surface 142 of the base 134. The mounting tabs 140 are used to mount the carrier 130 to the circuit board. In the illustrated embodiment, the mounting tabs 140 are arcuate tabs. The mounting tabs 140 may have other shapes in alternative embodiments. For example, the mounting tabs 140 may be pins or posts in alternative embodiments.

In an exemplary embodiment, the base 134 includes one or more outer rims 146 at an outer edge 148 of the base 134. The outer rims 146 extend upward from the upper surface 144. The outer rim 146 is located radially outward from the support ring 136. The antenna element 160 is located in the gap or space between the outer rims 146 and the support ring 136. While the outer rims 146 are shown as extend approximately the entire perimeter of the outer edge 148, the outer rims 146 may be spaced apart from each other, such as with large gaps therebetween.

The support ring 136 supports the antenna element 160. The support ring 136 extends from the base 134 to the top 135 of the carrier 130. In the illustrated embodiment, the support ring 136 is located at an inner edge 150 of the base 134. The support ring 136 defines at least a portion of the central bore 132. The support ring 136 extends to an upper edge 152. The support ring 136 has an inner surface 154 and an outer surface 156. The inner surface 154 faces the central bore 132. The outer surface 156 faces a pocket 158 between the support ring 136 and the outer rims 146. The pocket 158 receives the antenna element 160. In various embodiments, the support ring 136 has a uniform thickness between the inner and outer surfaces 154, 156. However, in alternative embodiments, the support ring 136 may be tapered between the base 134 and the upper edge 152, such as being thicker at the base 134 and thinner at the upper edge 152.

The antenna element 160 is configured to be coupled to the carrier 130. The antenna element 160 includes a conductor 162. The conductor 162 is formed into a cylindrical coil 164. The cylindrical coil 164 extends along the support ring 136 and surrounds the central bore 132. In an exemplary embodiment, the conductor 162 includes a wire 166, such as a coated wire having a coating or jacket on the exterior of the wire 166. The wire 166 may be a small diameter wire. In various embodiments, the wire 166 is a 0.2 mm wire; however, the wire 166 may have other diameters in alternative embodiments. Other types of conductors may be used in alternative embodiments other than a wire, such as a circuit such as a printed circuit or a laser direct structured (LDS) circuit.

The cylindrical coil 164 extends between a coil bottom 170 and a coil top 172. The cylindrical coil 164 is wound to include multiple windings 174. The windings 174 are stacked, such as being stacked vertically. The windings 174 may be stacked horizontally. In an exemplary embodiment, the cylindrical coil 164 is generally cylindrical extending along a vertical axis. The cylindrical coil 164 extends vertically along the support ring 136 above the base 134. The cylindrical coil 164 includes multiple layers stacked vertically above the base 134. For example, the conductor 162 may be helically wrapped around the central bore 132 to form the cylindrical coil 164.

In an exemplary embodiment, the conductor 162 includes multiple helical windings 174a vertically stacked in the cylindrical coil 164 between the coil bottom 170 and the coil top 172. The cylindrical coil 164 is wound to include a plurality of helical coil layers between the coil bottom 170 and the coil top 172. For example, the cylindrical coil 164 may include a bottom coil 176, a top coil 178, and at least one mid-coils 177 between the bottom coil 176 and the top coil 178. The bottom coil 176, the mid-coils 177, and the top coil 178 are vertically offset from each other (for example, vertically stacked). In various embodiments, the cylindrical coil 164 includes seven helical windings 174a (for example, bottom coil 176, five mid-coils 177, and top coil 178); however, greater or fewer helical windings 174a may be provided in alternative embodiments. Vertically stacking the helical windings 174a increases the overall length of the conductor 162 without increasing the footprint (for example, diameter) of the conductor 162.

In an exemplary embodiment, the conductor 162 may additionally include multiple spiral windings 174b horizontally stacked in the cylindrical coil 164 between the coil bottom 170 and the coil top 172. In the illustrated embodiment, the spiral windings 174b are provided at the coil top 172, such as aligned with the upper-most helical windings 174a. For example, the helical windings 174a are wound from the coil bottom 170 to the coil top 172 to define inner coils 180 and then the conductor 162 is further wound radially outside of the inner coils 180 back toward the coil bottom 170 to form at least one outer coil 182 located horizontally offset (for example, radially outward of) the inner coils 180. In various embodiments, the cylindrical coil 164 includes two outer coils 182 in addition to the seven inner coils (for example, the seven helical windings 174a) for a total of nine windings 174. The spiral windings 174b increase the total number of windings 174, and thus the total length of the conductor 162, without increasing the height of the cylindrical coil 164.

The conductor 162 extends between a first end 190 and a second end 192. The first and second ends 190, 192 are configured to be terminated to the circuit board or other electrical component. The conductor 162 is wound between the first and second ends 190, 192 to form the cylindrical coil 164. In an exemplary embodiment, the first and second ends 190, 192 are bent radially outward from the cylindrical coil 164. The first and second ends 190, 192 may extend parallel to each other for termination to the circuit board or other electrical component. The first and second ends 190, 192 may pass through the gaps between the outer rims 146 to the exterior of the carrier 130.

In an exemplary embodiment, the antenna element 160 is coupled to the outer surface 156 of the support ring 136, such as in the pocket 158. The cylindrical coil 164 may be adhered to the support ring 136, such as to the outer surface 156. Optionally, the spiral windings 174b may be located above the outer rims 146. The support ring 136 has a support ring height between the upper surface 144 of the base 134 and the upper edge 152 of the support ring 136. The cylindrical coil 164 has a coil height between the coil bottom 170 and the coil top 172. The coil height is defined by the number of windings 174 and the diameter of each wire 166. The coil height may be approximately equal to the support ring height. For example, the bottom coil 176 may rest on the upper surface 144 of the base 134 and the top coil 178 may be located at the upper edge 152 of the support ring 136.

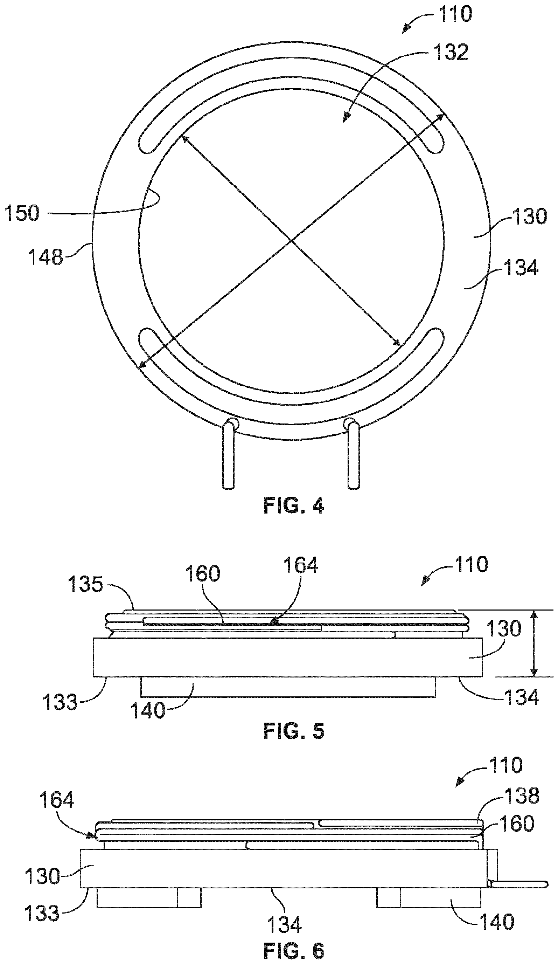

Figure 4 is a bottom view of the NFC antenna 110 in accordance with an exemplary embodiment. Figure 5 is a rear view of the NFC antenna 110 in accordance with an exemplary embodiment. Figure 6 is a side view of the NFC antenna 110 in accordance with an exemplary embodiment. The NFC antenna 110 includes the antenna element 160 coupled to the carrier 130. Figure 5 shows the NFC antenna 110 without the cover 138. Figure 6 shows the NFC antenna 110 with the cover 138.

The carrier 130 has a footprint defined by the base 134. The base 134 is ring shaped surrounding the central bore 132. The base 134 has an inner diameter defined by the inner edge 150. The inner diameter may be between 10 mm and 12 mm, such as approximately 10.8 mm in various embodiments. The base 134 has an outer diameter defined by the outer edge 148. The outer diameter may be between 13 mm and 15 mm, such as approximately 13.8 mm in various embodiments. The cylindrical coil 164 fits within the footprint of the carrier. For example, the cylindrical coil 164 may have a diameter of approximately 12.0 mm. The carrier 130 has a carrier height between the bottom 133 and the top 135. The mounting tabs 140 extend a distance beyond the bottom 133, but are configured to extend into the circuit board or other mounting structure. The carrier height may be approximately 2.0 mm in various embodiments. The cylindrical coil 164 has a coil height that fits within the height of the carrier 130, such as approximately 1.4 mm. The coil height may be defined by the number of windings and the diameter of the wire.

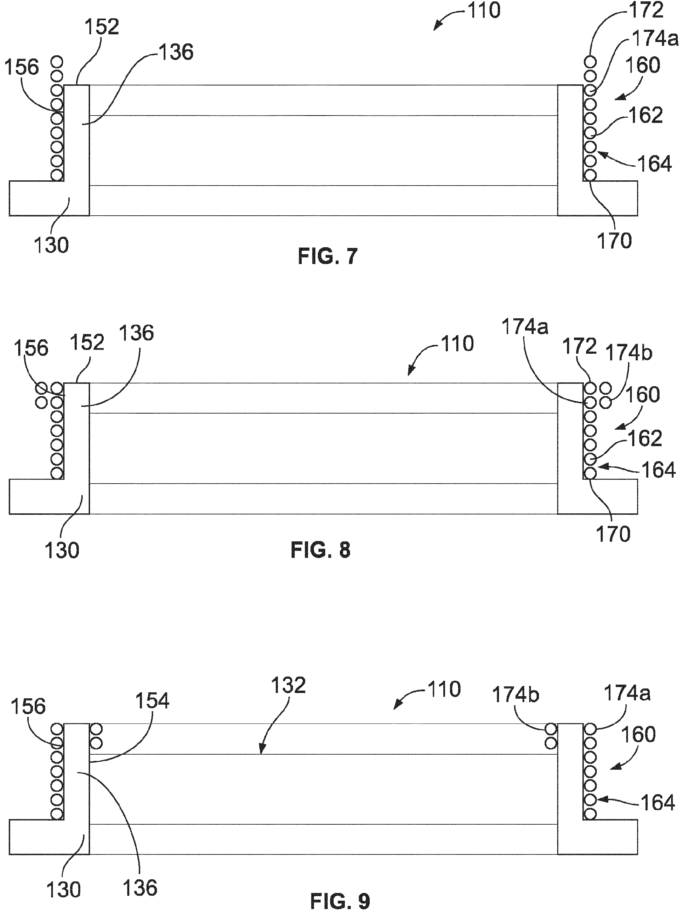

Figure 7 is a cross sectional view of the NFC antenna 110 in accordance with an exemplary embodiment. The NFC antenna 110 includes the antenna element 160 coupled to the carrier 130. The antenna element 160 is shown mounted to the outer surface 156 of the support ring 136. In the illustrated embodiment, the cylindrical coil 164 includes nine helical windings 174a vertically stacked in the cylindrical coil 164 between the coil bottom 170 and the coil top 172. The cylindrical coil 164 does not include any spiral windings 174b (Figure 3) in the illustrated embodiment. The cylindrical coil 164 extends above the upper edge 152 in the illustrated embodiment. Greater or fewer helical windings 174a may be provided in alternative embodiments. Vertically stacking the helical windings 174a increases the overall length of the conductor 162 without increasing the footprint (for example, diameter) of the NFC antenna 110.

Figure 8 is a cross sectional view of the NFC antenna 110 in accordance with an exemplary embodiment. The NFC antenna 110 includes the antenna element 160 coupled to the carrier 130. The antenna element 160 is shown mounted to the outer surface 156 of the support ring 136. In the illustrated embodiment, the cylindrical coil 164 includes seven helical windings 174a vertically stacked in the cylindrical coil 164 between the coil bottom 170 and the coil top 172 and two spiral windings 174b horizontally stacked with the corresponding helical windings 174a in the cylindrical coil 164, such as at the coil top 172. The spiral windings 174b are located radially outward of the helical windings 174a and radially outward of the support ring 136. The cylindrical coil 164 extends to the upper edge 152 in the illustrated embodiment. Greater or fewer helical windings 174a and/or greater or fewer spiral windings 174b may be provided in alternative embodiments. Vertically and horizontally stacking the helical windings 174a increases the overall length of the conductor 162 without increasing the footprint (for example, diameter) of the NFC antenna 110.

Figure 9 is a cross sectional view of the NFC antenna 110 in accordance with an exemplary embodiment. The NFC antenna 110 includes the antenna element 160 coupled to the carrier 130. The antenna element 160 is shown mounted to the outer surface 156 of the support ring 136 and the inner surface 154 of the support ring 136. In the illustrated embodiment, the cylindrical coil 164 includes seven helical windings 174a vertically stacked in the cylindrical coil 164 arranged along the outer surface 156 and two spiral windings 174b horizontally stacked with the corresponding helical windings 174a arranged along the inner surface 154. For example, the spiral windings 174b are located within the central bore 132. Greater or fewer helical windings 174a and/or greater or fewer spiral windings 174b may be provided in alternative embodiments. In alternative embodiments, both the helical windings 174a and the spiral windings 174b may be arranged along the inner surface 154 rather than being along the outer surface 156.

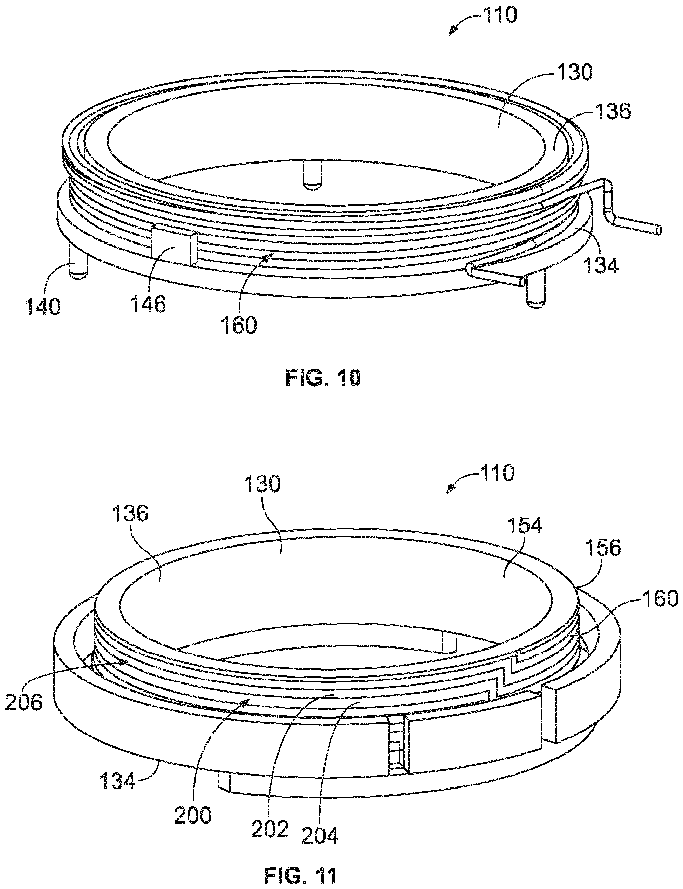

Figure 10 is a perspective view of the NFC antenna 110 of the first electrical device 102 (shown in Figure 1) in accordance with an exemplary embodiment. Figure 10 shows the NFC antenna 110 with the carrier 130 having the outer rims 146 in the form of locating tabs used to hold the antenna element 160 relative to the support ring 136. In various embodiments, two or three of the outer rims 146 may be provided spaced equidistant around the outer perimeter of the base 134. Other types of outer rims or no mounting rims may be used in alternative embodiments. Figure 10 shows the mounting tabs 140 in the form of posts or pins configured to be loaded into openings in the circuit board or other supporting structure. Other types of mounting tabs may be used in alternative embodiments.

Figure 11 is a perspective view of the NFC antenna 110 of the first electrical device 102 (shown in Figure 1) in accordance with an exemplary embodiment. Figure 11 shows the NFC antenna 110 with the antenna element 160 in the form of an LDS structure 200. The LDS structure 200 includes an LDS circuit 202 on an LDS substrate 204. The LDS substrate 204 may be a flexible film in various embodiments. The LDS circuits 202 are applied to the LDS substrate 204, such as to an inner surface and/or an outer surface of the LDS substrate 204. In the illustrated embodiment, the LDS structure 200 is provided at the outer surface 156 of the support ring 136. However, the LDS structure 200 may additionally or alternatively be provided at the inner surface 154 of the support ring 136. The LDS substrate may be defined by the carrier 130 in various embodiments. For example, the LDS circuits 202 may be formed on the surfaces of the carrier 130, such as the base 134 and/or the support ring 136.

The LDS circuits 202 include windings 206 around the LDS substrate 204. For example, the LDS circuits 202 may be arranged in a helical pattern and/or a spiral pattern. The windings 206 may be vertically offset and/or horizontally offset.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the invention without departing from its scope. Dimensions, types of materials, orientations of the various components, and the number and positions of the various components described herein are intended to define parameters of certain embodiments, and are by no means limiting and are merely exemplary embodiments. Many other embodiments and modifications within the spirit and scope of the claims will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

## Claims

1. A near field communication, NFC, antenna (110) comprising:
a carrier (130) having a base (134) and a support ring (136) extending from the base, the support ring surrounding a central bore (132), the central bore being open through the carrier between a top (135) of the carrier and a bottom (133) of the carrier; and
an antenna element (160) coupled to the carrier, the antenna element including a conductor (162) arranged as a cylindrical coil (164), the cylindrical coil extending along the support ring (136) and surrounding the central bore.

2. The NFC antenna of claim 1, wherein the cylindrical coil (164) extends vertically along the support ring above the base.

3. The NFC antenna of claim 1 or 2, wherein the cylindrical coil (164) includes multiple layers stacked vertically above the base (134).

4. The NFC antenna of claim 1, 2 or 3, wherein the conductor (162) is helically wrapped around the central bore (132) to form the cylindrical coil (164).

5. The NFC antenna of any preceding claim, wherein the conductor (162) includes multiple helical windings (174a) vertically stacked in the cylindrical coil and multiple spiral windings (174b) horizontally stacked in the cylindrical coil.

6. The NFC antenna of any preceding claim, wherein the cylindrical coil (164) extends between a coil bottom (170) and a coil top (172), the cylindrical coil including a plurality of helical coil layers (174a) between the coil bottom and the coil top, the cylindrical coil including a plurality of spiral coil layers (174b) at the coil top.

7. The NFC antenna of any preceding claim, wherein the cylindrical coil (164) is wound to include a bottom coil (176) and a top coil (178) vertically offset from each other, the cylindrical coil being wound to include an inner coil (180) and an outer coil (182) being horizontally offset from each other.

8. The NFC antenna of any preceding claim, wherein the support ring (136) has a support ring height between an upper surface (144) of the base and an upper edge (152) of the support ring, the cylindrical coil (164) having a coil height between a bottom coil (176) and a top coil (178) of the cylindrical coil, the coil height being approximately equal to the support ring height.

9. The NFC antenna of any preceding claim, wherein the conductor (162) is a coated wire wrapped around the central bore (132) to form the cylindrical coil (164).

10. The NFC antenna of any one of claims 1 to 8, wherein the conductor (206) is a laser direct structuring, LDS, circuit (202) formed on an LDS substrate (204), the LDS substrate being coupled to the support ring (136) to wrap the LDS circuit around the central bore (132).

11. The NFC antenna of any preceding claim, wherein the conductor (162) extends along an outer surface (156) of the support ring (134).

12. The NFC antenna of any preceding claim, wherein the conductor (162) extends along an inner surface (154) of the support ring (134).

13. The NFC antenna of any preceding claim, wherein the base (134) comprises an outer rim (146) radially outward from the support ring (136), the conductor being received in a pocket (158) between the outer rim (146) and the support ring (136).

14. The NFC antenna of any preceding claim, wherein the cylindrical coil (164) is adhered to the support ring (134).

15. The NFC antenna of any preceding claim, further comprising a cover (138) coupled to an upper edge (152) of the support ring (136), the cover covering the central bore (132), the cover being removable from the carrier (130).
